# EUROPEAN PATENT SPECIFICATION

(11) **EP 2 244 268 B1**
(45) Date of publication and mention of the grant of the patent: **13.04.2016**
(21) Application number: 09005685.4
(22) Date of filing: 23.04.2009
(51) Int. Cl.: H01F 1/00, B03C 1/01

(54) **Process for manufacturing chemically stable magnetic carriers**
Herstellungsverfahren für chemische stabile magnetische Träger
Procédé de production de porteurs magnétiques chimiquement stables

(43) Date of publication of application: 27.10.2010
(73) Proprietor: Turbobeads GmbH, 8057 Zürich (CH)
(72) Inventor: Grass, Robert, 8057 Zürich (CH)
(74) Representative: Grimm, Siegfried

(56) References cited:
- EP-A- 1 568 427
- US-A- 5 547 748

## Description

The present invention relates to a method for manufacturing magnetic material in the form of nanoparticles and a method for manufacturing composites containing such nanoparticles. The obtained particles are particularly stable when compared to the prior art.

Various magnetic separation techniques are known wherein cells, proteins, antibodies or nucleic acids are removed from biological media, e.g. during medical diagnostic tests. These magnetic separation techniques use magnetic carriers, which have surfactants, polymers, oxides, or other chemical species attached or adsorbed to the particle surfaces. Such magnetic separation circumvents the problems of biochemical separation using chemical or chromatographic methods. In general, magnetic particles of small particle size are preferred, since these have larger surface areas and therefore smaller amounts of these particles are required for the same separation efficiency. However, the problem of chemical stability is strongly increased by decreasing the length scales of the particles and their coatings.

WO96/41811 describes magnetic pigments containing a magnetic core coated with a substantially free glass layer and uses thereof, such as for the isolation of biological materials from samples, especially the isolation of nucleic acids. WO2006/136314 describes magnetic particles coated with silica, whereas the thickness of the silica coating is 5 nm or less. This document also addresses a lack of acid stability of silica coated magnetite particles. Bruce et al. (Journal of Magnetism and Magnetic Materials Vol 284 P 145 ff) describes the synthesis, characterization and application of silica-magnetite nanoparticles. This document also addresses a significant disadvantage of silica coated magnetic carriers, which is the very low chemical stability of these materials in acidic media (all materials are completely destroyed within 4 minutes in conc. HCl). The low stability of the particles in acidic media, disclosed in these documents, not only limits the applicability of silica coated magnetic carriers to non-acidic media, but also has decreased the long-term storage stability of these materials under physiological or neutral conditions.

WO2008/055371 discloses nanoparticles of the core shell type with functionalized groups and methods for separating material from a continuous phase. Although suitable, it was found that the effectiveness of these particles and processes is not sufficient for all separating processes.

EP-A-1 568 427 discloses a magnetic iron particle having a multilayer coating consisting in graphite covered by silicon oxide, further embedded in a resin.

In consequence, there is a need for particles suitable to magnetic separation processes, which overcome one or more of the above identified disadvantages.

Hence, it is a general object of the invention to provide processes that overcome one or more of the disadvantages identified above. In particular, it is an aim of the present invention to provide a process to manufacture magnetic nanoparticles with improved chemical stability.

The present invention will be described in more detail below. It is understood that the various embodiments, preferences and ranges as provided / disclosed in this specification may be combined at will. Further, depending of the specific embodiment, selected definitions, embodiments or ranges may not apply.

These objectives are achieved by providing a method for manufacturing particles as defined in claim 1. Further aspects of the invention are disclosed in the specification and inde-pendent claims, preferred embodiments are disclosed in the specification and the dependent claims.

As it will become apparent when reading this specification, the invention relates to processes for manufacturing magnetic particles according to claim 1 and to processes for manufacturing composites containing such particles according to claims 12 and 13.

The invention will be better understood and objects other than those set forth above will become apparent when consideration is given to the following detailed description thereof. Such description makes reference to the annexed figures, wherein:
Figure 1 schematically shows, in one embodiment, nanoparticles wherein (A) represents a magnetic core, (B) represents a carbon layer and (C) represents a glass coating;
Figure 2 schematically shows, in a further embodiment, nanoparticles with multiple carbon coated cores within a single shell, (A) represents the magnetic cores, (B) represents the carbon layers and (C) represents the glass coating;
Figure 3 schematically shows, in a further embodiment, nanoparticles with a non-spherical silica coated carbon coated magnetic carrier with multiple carbon coated cores within a single silica shell, (A) represents the magnetic cores, (B) represents the carbon layers and (C) represents the glass coating;
Figure 4 schematically shows a spherical silica coated carbon coated magnetic carrier with an additional surface functionality (primary amine, functional layer D));
Figure 5 schematically shows a spherical silica coated carbon coated magnetic carrier with a polymer adsorbed on the surface (functional layer (D));
Figure 6 shows the IR spectrum of the material produced in example 2 (characteristic peaks of the Si-O-Si bonds are highlighted; X-axis represents wavenmubers (cm-1); Y-axis represents transmission / a.u.);

Unless otherwise stated, the following **definitions** shall apply in this specification:
The "diameter" of a particle used herein is the volume-surface-average diameter of the primary particle and may be determined by nitrogen adsorption using the BET method (according to: Janssen, Zirkzee, German and Maxwell, Journal of Applied Polymer Science 52, 1913, 1994).

The "thickness" of a layer used herein is the average thickness of a layer as viewed in two dimensions with a transmission electron microscope.

The term "separation technique" (or "separation step") is known in the field and used in its broadest sense. Such separation step may be part of a manufacturing process, such as the isolation step of a starting material or end-product; may be a step of a cleaning process, or may be a step of a diagnostic analysis.

The term "Magnetic carrier" is known in the field; it relates to small magnetic particles (typically below 10 micron, in some cases below 10 nm). Such carriers are useful for separating a dispersed phase from a continuous phase, whereas the dispersed phase can be either heterogeneous (such as oil droplets in an aqueous emulsion) or homogeneous (such as a solute in a solvent). The surface of the magnetic carriers is typically adapted to specifically interact with the dispersed phase.

In more general terms, in one aspect, the disclosure relates to magnetic nanoparticles with an outer glass surface.

One embodiment, relates to nanoparticles consisting of a shell and one or more magnetic cores wherein said magnetic core consist of a ferromagnetic, ferrimagnetic or superparamagnetic material (A) coated with one or more graphene layers (B) and wherein said shell (C) consists of an oxidic glass composition.

**Particles:** The invention relates to a manufacturing method for particles in the nanometer scale, such particles are often termed "nanoparticles". Suitable are particles between 10 - 2000nm, preferably 10 - 500 nm, particularly preferably 20 - 100 nm. Such particle size results in material having a high surface area (e.g. > 5 m²/g) and allows a stronger interaction between the particle and the dispersed phase in separation processes.

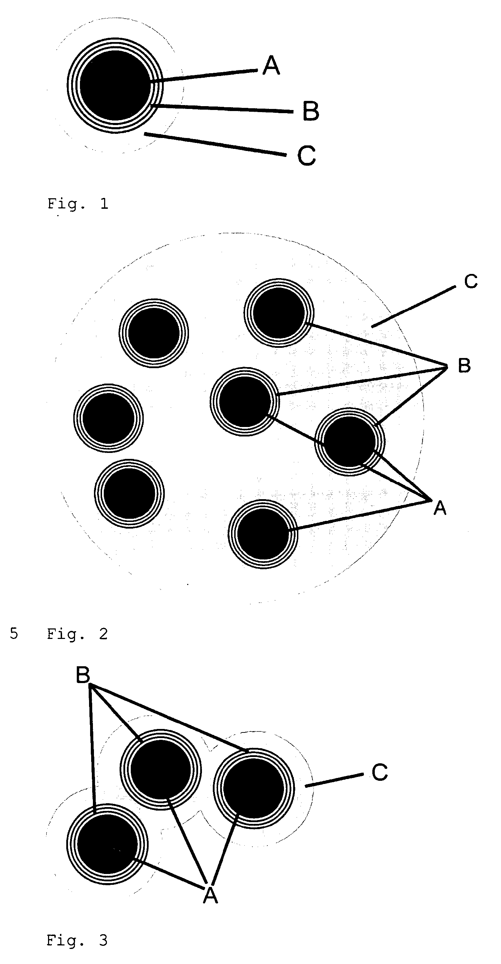

Nanoparticles, in the context of this disclosure, comprise primary particles as illustrated by figure 1 and secondary particles as illustrated by figures 2 and 3. Thus, primary particles are particles of the core shell type consisting of one magnetic core, which is coated by a graphene layer, which in turn is coated by an oxidic glass layer. The term secondary particle includes such particles which are formed by interaction of primary particles (fig. 3). The term secondary particles further include such particles wherein a multitude of graphene coated magnetic cores is coated by an oxidic glass layer (fig.2). These secondary particles can be significantly larger than the so-called primary particles. Secondary particles can be formed by primary particles attached to each-other by physical forces, such as Van-der-Waals forces, or by individual primary particles grown together which have solid necks between the individual primary particles an can be formed by Oswald ripening or sintering. The 3-D fractal dimension of the secondary particles can vary over a wide range from just above 1 to nearly 3.

Thus, the invention relates to a manufacturing method for magnetic material (also termed "magnetic carrier", "magnetic pigment") with two coatings, whereas the inner coating consists of carbon and the outer coating consists of an oxidic glass.

**Magnetic core:** For supporting separation processes, the magnetic core must be ferromagnetic, ferrimagnetic or superparamagnetic. Suitable materials for forming such a magnetic core are known per se. The material of said magnetic core (A) is preferably selected from the group consisting of iron, cobalt, nickel, gadolinium, samarium and combinations thereof in any oxidation state. This includes metals, alloys, oxides, mixed oxides, carbides. Preferably, the material of the core is selected from the group consisting of iron carbides; iron oxides, mixed iron oxides; iron, cobalt, nickel and its alloys. Typically, the magnetic core consists of, or essentially consists of such material.

In an advantageous embodiment, the material of the magnetic core is superparamagnetic.

The size of said magnetic core (A), may vary in a broad range, but is typically between 10 - 1000 nm, preferably between 10 - 50 nm

**Graphene layers:** The carbon layer, which is situated between the magnetic core and the outer glass coating, has a structure identical to or similar to stacked graphene layers. Due to its size, the shells are sometimes also characterized as "Super-Buckminster-fullerenes". The term "graphene" indicates that the carbon atoms are predominantly (or almost exclusively) present in the sp2-hybridization state without additional atoms bound. Thus, the graphene layer (B) essentially consists of or consists of carbon which is of sp2 and/or sp3 hybridization, preferably of sp2 hybridization. The thickness of said graphene layer (B) may vary in a broad range, but is typically less than 100 nm often less than 3nm. It was surprisingly found that such thin layers result in particles being remarkably more stable than particles without such layers. The disclosure also relates to particles as described herein, wherein said graphene layer (B) consist of 1-300, preferably 2-10 layers of carbon.

**Shell:** The oxidic glass layer is located at the outside of the particle; it forms the surface of such particle, subject to further functionalization as described below. The term oxidic glass layer is known in the field; it particularly relates to a glass-like material consisting of at least 50 wt% silica ("silica glass composition"). In an advantageous embodiment, the material of shell (C) is of pure or essentially pure silica. In an alternative embodiment, the material of shell (C) is doped silica containing less than 50 wt-%, preferably less than 30 wt-%, dopants selected from the group con-sisting of boron (B2O3), Alumminium (Al2o3), calcium (CaO), sodium (Na2O), potassium (K2O), iron (Fe2O3), cobalt (CoO), chlorine (e.g. NaCl), fluorine (e.g. NaF), carbonate (e.g. Na₂CO₃), phosphate (e.g. Na₃PO₄). Such dopants are known in the field and may be added to improve separation processes, particularly to improve selectivity.

In an advantageous embodiment, the oxidic glass layer (C) consists of amorphous (pure or doped) silica, as defined herein. This may be determined by X-ray diffraction and/or transmission electron microscopy.

The thickness of said shell (C) may vary in a broad range, but is typically in the range of 1 - 500 nm. As outlined above, said shell may enclose just one carbon coated magnetic core (fig. 1), or a multitude of carbon coated magnetic core within a single particle (fig. 2 and 3). It was found that such thin layers result in particles being remarkably selective and active in separation processes as described herein. It was found advantageous if the shell fully or essentially fully covers the surface of the particle.

The surface of the glass layer can either be covered with silanol (Si-O-H) groups or without silanol groups and may be further covered by a functional layer as defined below.

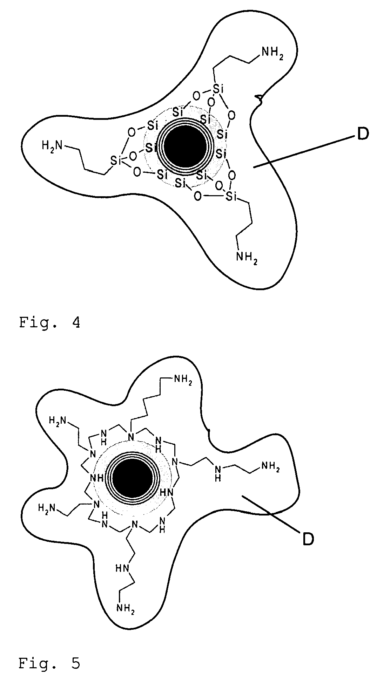

Further embodiments are given below:
**Functional layer:** If necessary or desired, the oxidic glass layer (C) may be further functionalized, e.g. by chemical functionalization strategies (Figure 4). Thus, in a further embodiment, particles are defined wherein shell (C) is partly or fully covered with a functional layer (D); said functional layer (D) being bound covalently or by intermolecular forces to shell (C). Such functional layer (D) consists of small molecules with one or more functional groups (fig. 4) or of a polymer coating (fig. 5). Small molecules include compounds having a molecular weight below 2000 g/mol, preferably 520 g/mol. Examples for small molecules are functionalized alkylsilanes, such as 3-aminopropyl-triethoxysilane or triethoxy (1 H,1 H,2 H,2H- perfluoro1-octyl)silane. Typically, small molecules are bound covalently to the glass layer (C) of the particle. Polymers, useful for polymer coatings as described above, include compounds having a molecular weight in the range of 2'000 - 100'000 g/mol. Examples for such polymers are polyethyleneglycols or polyethylenimines. Typically, such polymers are bound by intermolecular forces, such as adsorption, to the glass layer (C) of the particle. The polymers identified above may be crosslinked. Such crosslinked polymers show improved binding properties.
**Magnetic mass saturation magnetization:** In a further embodiment, particles are defined wherein magnetic core (A) has a high magnetic mass saturation magnetization, preferably above 70 A m² / kg. The high magnetic properties of the core allow a fast and efficient removal of the magnetic particle during the separation processes as disclosed herein. The "magnetic mass saturation magnetization" is used as magnetic mass saturation magnetization at a magnetic field of 2.0 Tesla at room temperature. The magnetic particle has a high magnetic mass saturation magnetization, preferably above 70 A m² / kg. This can be achieved by using a magnetic cores of high magnetic mass saturation magnetization (e.g. iron, iron carbide, cobalt or alloys containing iron, iron carbide and/or cobalt together with other elements) and the mass fraction of said core (A) in terms of total particle mass is high, preferably above 50 wt%.
**Magnetic coercivity:** In a further embodiment, particles are defined wherein the magnetic core (A) has a low magnetic coercivity, preferably below 16000 A / m, more preferably below 12000 A / m and most preferably below 8000 A / m.
**Acid stability:** In a further embodiment, particles are defined having a high chemical stability in acidic media. The stability in acidic media is may be evaluated by adding 100 mg of particles which have a saturation magnetization of at least 50 A m² / kg to 10 ml of hydrochloric acid (1 molar). After 24 hours the magnetic carriers are collected, e.g. by an appropriate solid state magnet, and dried. The magnetic moment in a magnetic field of 2 Tesla of the dried material is taken as a measure of the acid stability. The material is characterized as having a high chemical stability if the magnetic moment at 2 Tesla of dried material according to the described test is larger than 50 % of the initial material magnetic moment at 2 Tesla, more preferred larger than 80 % and most preferred larger than 90 %. Consequently, particles are considered chemically stable, if at least 50 % (preferably 80%, particularly preferably 90%) of the initial material magnetic moment at 2 Tesla is maintained after 24 hrs treatment of 1N HCl at room temperature.
**Size / Size distribution:** In an embodiment the distribution of the particle diameter of the particles is narrow. The distribution of the particle diameter is evaluated by measuring the particle diameters of at least 200 individual, representative particles from transmission electron micrographs. The particle size distribution is then fitted by a log-normal distribution (see Grass and Stark, Journal of Materials Chemistry 2006 Vol. 16, P 1825 ff). The distribution is characterized as narrow if the geometric standard deviation of the measured and fitted distribution is below 1.7, more preferably below 1.5 and most preferably below 1.3. A narrow size distribution, as described above, improves the quality of the particles and simplifies the uses disclosed herein.

It is apparent from the intended use that the core (A) should be large compared to the coatings (B) and (C). Layers (B) and (C) should be as thick as necessary but as thin as possible to obtain particles that optimally meet the requirements. It was found advantageous, it the diameter of (A) is at least 1/4, preferably at least 1/2, of the particle diameter. Particles meeting these parameters were found to be chemically stable and effective in separation processes.

In an embodiment, nanoparticles are defined consisting of a first and second shell and one or more magnetic cores wherein said magnetic core (A) consist of Co, Fe, FeC, Ni and its alloys, the material of said core shows a magnetic mass saturation magnetization of more than 100A m²/kg; wherein said magnetic core (A) is coated with a first shell of one or more graphene layers (B), said graphene layers (B) having a thickness below 20 nm; wherein said coated particles (A) + (B) are coated with a second shell (C), said second shell (C) consists of an silica glass composition having a thickness below 20 nm; wherein the diameter of said nanoparticles is below 100 nm and
wherein said nanoparticles have an acid stability, as defined herein, of at least 90%.

In a another aspect, the disclosure relates to compositions / composite materials containing particles. Consequently, it relates to a composite containing (i.e. comprising or consisting of) a polymer material (E) and particles as defined herein wherein said particles are either located at the surface of said polymer (E) ("coated composite") or distributed within said polymer (E) ("blend"). In this aspect, the particles are treated like pigments. Any composition or shaped article which may be treated with pigments may be treated with the particles as well using similar manufacturing processes.

In a another aspect, the invention relates to processes for manufacturing the particles. In one embodiment, the invention relates to a process for manufacturing particles as disclosed herein, comprising the steps of a) providing particles with a magnetic core (A) and coated with a graphene layer (B); b) activating said nanoparticle; c) coating the activated particle with an oxidic glass composition; d) optionally further functionalizing the obtained particle with small molecules.

In general, carbon coated particles are produced commercially and can be obtained from several suppliers. In principle, the deposition of silica containing oxidic glasses on particulate structures is known, see e.g. Bruce et al. (Journal of Magnetism and Magnetic Materials Vol 284 P 145 ff). This process may be applied in analogy to the present starting material. The manufacturing shall be explained in further detail below:
**Starting Material:** The starting materials, particles with a magnetic core (A) and coated with a graphene layer (B), are known or available according to known procedures. Particulate magnetic materials are accessible by dry and liquid phase synthesis. These include single and mixed oxides (e.g. magnetite, cobalt ferrite, zinc ferrite) carbides (e.g. gadolinium carbide, iron carbide) metals and their alloys (e.g. iron, cobalt, permendur, hastelloy). These materials are accessible at various particle sizes, ranging from just several nanometers to microns, e.g. Grass and Stark (Journal of Materials Chemistry 2006, Vol. 16, P 1825 - 1830). Various methods are described in literature for the carbon coating of particulate media of various particle sizes. These can either be in-situ gas phase methods, high temperature decomposition methods or liquid phase methods, e.g. Lu et al. (Chemical Communications 2004, P 2442 f).
**Activation:** To facilitate the formation of silica on the surface of the carbon coated particles, the surface of the carbon may be altered ("activated"). In one embodiment, such activation is achieved by chemical modification; such as introducing functional groups by diazonium chemistry (see e.g. WO2008/055371). In a further embodiment, such activation is achieved by coating the carbon coated magnetic particles with appropriate polymers (e.g. polyethylenimine). In a further embodiment, such activation is achieved by oxidizing the surface of the carbon by temperature and/or strong acids.
**Coating:** The chemically modified carbon coated magnetic particles are coated with silica according to standard processes. In one embodiment, such coating is achieved by a sol-gel process optionally followed by temperature treatment (see e.g. Bruce et al. Journal of Magnetism and Magnetic Materials Vol 284 P 145 ff).
**Functionalizing:** The thus obtained particles may be further functionalized according to standard procedures. In one embodiment, such functionalization is achieved by reacting the particle with a corresponding silane, such as e.g. (3-Aminopropyl)triethoxysilane or vinyltrimethoxysilane.

In another aspect, the invention relates to processes for manufacturing composite materials as disclosed herein.

In one embodiment, the invention relates to a process for manufacturing composites as described herein comprising the step of coating a polymer with particles as described herein. This process is particularly suitable to obtain a coated composite. In this embodiment, said polymer serves as a substrate. The particles may be coated on such substrate in any convenient manner, known to a person skilled in the art. The particles may be directly coated on such substrate or in the form of a suitable composition, e.g. a suspension containing said particles.

In a further embodiment, the invention relates to a process for manufacturing composites as described herein comprising the step of combining a pre-polymer with particles as described herein and allowing the obtained mixture to form a blend. This process is particularly suitable to obtain a blend. A pre-polymer may be any material capable in forming a polymeric shaped article, and includes emulsions, suspensions, solutions of monomers as well as molten polymers.

In another aspect, the invention relates to the use of magnetic particles and composites as disclosed herein.

While there are shown and described presently preferred embodiments of the invention, it is to be distinctly understood that the invention is not limited thereto but may be otherwise variously embodied and practiced within the scope of the following claims. The examples given below are intended to further illustrate the invention, with no intend to limit the scope of the invention.

### Example 1 - Preparation of carbon coated cobalt nanoparticles

Cobalt 2-ethylhexanoate in mineral spirits (Aldrich, 65 wt% Co) was diluted 2:1 with tetrahydrofurane prior to use. A spray nozzle was placed in a glove-box fed with nitrogen (PanGas, 5.0) which was recirculated by a vacuum pump (Busch, Seco SV1040CV) at about 20 m³/h. CO₂ and H₂O were continuously removed from the recycle stream using two adsorption columns, packed with zeolite 4A and 13X (Zeochem), respectively. To avoid the accumulation of CO, NO and other impurities in the glove-box atmosphere a purge gas stream continuously passed the box. A sinter metal tube (GKN Sintermetalle, inner diameter 25 mm) surrounding the flame allowed radial inflow of an reactive carbon depositing gas (PanGas, Acetylene, tech 5 l/min diluted with N₂, 25 l/ min). A mass spectrometer (Balzers, GAM 400) was applied for the detection of the gas concentrations of H₂, N₂, CO₂, NO, NO₂ and O₂. A separate data acquisition and control unit allowed controlling of the mass spectrometer, the liquid feed pump, mass flow controllers (Brooks) for sheath, dispersion and ignition gases as well as temperature of the box atmosphere and the adsorption columns. An oxygen concentration of below 100 ppm (volume/volume) was maintained during all experiments performed in the glove-box. The Co-carboxylate-based precursor was fed (6 ml/min, HNP Mikrosysteme, micro annular gear pump mzr-2900) to the spray nozzle where it was dispersed by oxygen (5 1 / min, PanGas tech.) and ignited by a premixed methane/oxygen flame (CH4: 1.2 1 / min, O₂: 2.2 1 / min, PanGas tech.). The produced particles were separated from the off-gas using glass fiber filters (Schleicher & Schuell, GF6).

The particles had a specific surface area of 15 m²/g as evaluated by nitrogen adsorption using the BET method resulting in a volume-surface-average diameter of 46 nm (according to: Janssen, Zirkzee, German and Maxwell, Journal of Applied Polymer Science 52, 1913, 1994). Transmission electron microscopy revealed spherical particles covered by several (3-5) layers of graphene. The carbon content of 2 wt% as evaluated by quantitative microanalysis using CHN-900 (Leco Instrumente GmbH) and resulted in an average thickness of the graphene coating of 0.7 nm (calculated using the specific surface area, SSA, the carbon content, CC, and the carbon density, pc, as d = CC / pc / SSA). The particles had a saturation magnetization of above 150 A m² / kg and a coercive force of below 8'000 A / m as evaluated using a Physical Property Measurement System (Quantum Design). The material mass did not change more than 5 wt% upon heating in air, up to a temperature of 180°C, where it fully oxidized, as evidenced in a thermobalance.

### Example 2 - Silica coating of carbon coated cobalt nanoparticles

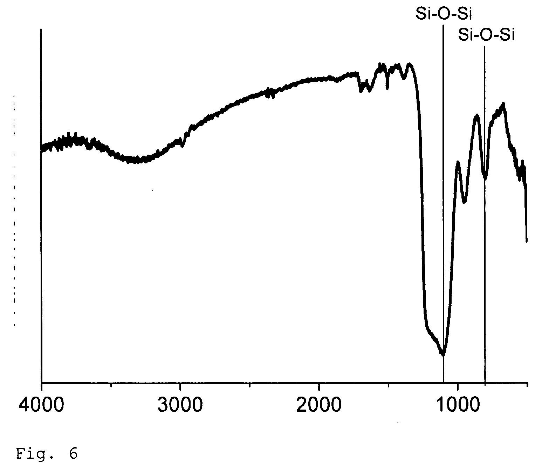

2 g Carbon coated nanoparticles of example 1 were dispersed with the aid of an ultrasonic horn in 40 ml of water containing 0.4 g of 4-(2-Aminoethyl)aniline and 1.2 ml concentration hydrochloric acid. In a separate vessel 0.3 g NaNO₂ were solved in 20 ml water and added to the dispersed carbon coated particles. The reaction volume was further dispersed with the aid of an ultrasonic horn for 1 minute and left to stand in an ultrasonic bath for further 30 minutes. The magnetic particles were then magnetically separated and washed three times with water and 6 times with acetone, each time dispersing the particles in the washing solution and collecting them with a magnet. The particles were then dried in vacuo. 100 mg of the dry particles were dispersed by the aid of an ultrasonic horn in a solution containing 20 ml isopropanol, 0.1 ml NH₃ (from a 25 wt% solution) and 3.9 ml water. The solution was allowed to cool to room temperature and 0.2 ml of tetraethoxysilane was added. The reaction volume was constantly shaken for 16 hours at room temperature and washed with isopropanol 3 times, with ethanol 3 times and dried in vacuo. The dried particles were analyzed by IR-spectroscopy (Figure 6) and transmission electron microscopy. While the IR spectrum (Figure 6) shows peaks characteristic for silica (Si-O-Si bond IR characteristics at 1090 and 790 cm⁻¹), the transmission electron images revealed particles of the structure shown in Figure 1 and Figure 3. The particles had a specific surface area of 9 m²/g (evaluated by nitrogen adsorption using the BET method).

### Example 3 - chemical stability

The chemical stability of silica coated carbon coated magnetic particles is compared with silica coated magnetic particles without carbon layer. For this purpose, the chemical stability in concentrated hydrochloric acid (4 M HCl) of the particles produced in example 2 has been measured.

The following experimental procedure was followed: the magnetization of 100 mg of the particles produced in example 2 was measured at a magnetic field of 2 Tesla with a vibrating sample magnetometer (Princeton Measurements Corporation Model 3900). The material was then immersed in 4 M HCl for a given period of time. At the end of the experiment immersion time, the particles were collected from the liquid volume by the aid of a neodymium based magnet, washed with water three times. The magnetic moment of the remaining, dried material was measured at 2 Tesla. The value of interest is the magnetic moment of the material after immersion divided by the magnetic moment prior to the immersion. For a comparison with literature data, the data is given as magnetic moment of the sample at 2 Tesla after storage in HCl over the initial magnetic moment of the sample at 2 Tesla.

| Particle | Time of HCl wash | Initial saturation magnetization (A m² / kg) | Remaining magnetic moment at 2 Tesla after HCl wash |
|---|---|---|---|
| Ref 1* | 5 min | ∼ 80 | < 25 %*** |
| Ref 2** | 5 min | ∼ 80 | < 25 %*** |
| Example 2 | 5 min | > 120 | > 90 % |
| Example 2 | 1 day | > 120 | > 80 % |
| Example 2 | 1 week | > 120 | > 80 % |
| Example 2 | 1 month | > 120 | > 80 % |

| | | | |
|---|---|---|---|
| * Data taken from Bruce et al. (Journal of Magnetism and Magnetic Materials Vol. 284 P 156) magnetite with 4 layers of silica deposited by the silicic acid method ** Data taken from Bruce et al., magnetite with 5 layers of silica deposited by the TEOS method. *** Estimated from absorbance data given by Bruce et al. Figure 4. | | | |

The data provided clearly support the advantageous properties of the present nanoparticles when compared to the prior art.

## Claims

1. A method for manufacturing particles,
said particles having a diameter of between 10 - 2000 nm, and
said particles consisting of a shell and one or more magnetic cores, wherein said magnetic core consist of a ferromagnetic, ferrimagnetic or superparamagnetic material (A) coated with one or more graphene layers (B) and said shell (C) consists of an oxidic glass composition, and
said method comprising the steps of
a) providing particles with a magnetic core (A) and coated with a graphene layer (B),
b) activating said particles b1) by chemical modification, b2) by coating with polymers or b3) by oxidizing the surface of the carbon,
c) coating the activated particles with an oxidic glass composition,
d) optionally further functionalizing the obtained particles with small molecules.

2. The method according to claim 1 wherein in step b)
- such chemical modification is achieved by introducing functional groups by diazonium chemistry, or
- such coating is achieved with polymers selected from the group of polyethylenimines, or
- such oxidation is achieved by temperature and/or strong acids.

3. The method of claim 1 or 2, wherein said particles are primary nanoparticles or secondary nanoparticles.

4. The method according to any of claims 1 to 3, wherein the size of said magnetic core (A) is between 10 - 1000 nm.

5. The method according to any of claims 1 to 4, wherein the thickness of said graphene layer (B) is less than 100 nm.

6. The method according to any of claims 1 to 5, wherein the thickness of said shell (C) is 1-500 nm.

7. The method according to any of claims 1 to 6, wherein the material of said magnetic core (A) is selected from the group consisting of iron, cobalt, nickel, gadolinium, samarium and combinations thereof in any oxidation state.

8. The method according to any of claims 1 to 7, wherein the graphene layer (B) essentially consists of, or consists of carbon which is sp2 hybridized.

9. The method according to any of claims 1 to 8, wherein the material of said shell (C) is selected from the group consisting of
- Silicate glass compositions or
- pure or essentially pure silica; or
- doped silica containing less than 50 wt-% dopants selected from the group consisting of boron, calcium, sodium, iron, cobalt, potassium, chlorine, fluorine, carbonate, phosphate.

10. The method according to any of claims 1 to 9, wherein shell (C) is partly or fully covered with a functional layer (D) said functional layer (D) being bound covalently or by intermolecular bonds to shell (C) and said functional layer (D) consist of small molecules with one or more functional groups, preferably wherein said small molecules are selected from the group of silanes having a molecular weight below 520g/mol.

11. The method according to any of claims 1 to 10, wherein at least 50 % of the initial material magnetic moment at 2 Tesla is maintained after treatment of 1N HCl at room temperature for 24 hrs.

12. A method for manufacturing a composite, wherein said composite contains a polymer material (E) and particles obtained according to any of claims 1 - 11, and
said particles are located at the surface of said polymer (E), and
said method comprising the step of coating said polymer with said particles.

13. A method for manufacturing a composite, wherein said composite contains a polymer material (E), and particles obtained according to any of claims 1 - 11, and
said particles are distributed within said polymer (E), and
said method comprising the step of combining a pre-polymer with said particles and allowing the mixture to form a blend.

## Patentansprüche

1. Eine Methode zur Herstellung von Partikeln, wobei
besagte Partikel einen Durchmesser von 10 - 2000 nm aufweisen, und
besagte Partikel aus einer Hülle und einem oder mehreren magnetischen Kernen bestehen, wobei besagte magnetische Kerne aus einem ferrromagnetischen ferrimagnetischen oder superparamagnetischen Material (A) bestehen, beschichtet mit einem oder mehreren Graphen-Schichten (B) und besagte Hülle (C) aus einer oxydischen Glass - Zusammensetzung besteht, und
besagte Methode die Schritte umfasst:
a) zur Verfügung stellen von Partikeln mit magnetischen Kern (A) und beschichten mit einer Graphen-Schicht (B),
b) Aktivieren der besagten Partikel b1) mittels chemischer Modifikation, b2) mittels Beschichten mit Polymer oder b3) mittels Oxidation der Oberfläche des Kohlenstoffs,
c) Beschichten der aktivierten Partikel mit einer oxidischen Glass - Zusammensetzung,
d) gegebenenfalls weitere Funktionalisierung der erhaltenen Partikel mit kleinen Molekülen.

2. Die Methode nach Anspruch 1, worin in Schritt b)
- solch chemische Modifikation durch einführen einer funktionalen Gruppe durch Diazonium Chemie erreicht wird, oder
- solch Beschichten mit Polymeren aus der Gruppe der Polyethylenimine erreicht wird, oder
- solch Oxidation durch Temperatur und / oder starke Säuren erreicht wird.

3. Die Methode nach Anspruch 1 oder 2, worin besagte Partikel primäre Nanopartikel oder sekundäre Nanopartikel sind.

4. Die Methode gemäß einem der Ansprüche 1 bis 3, worin die Grösse des magnetischen Kerns (A) zwischen 10 - 1000 nm beträgt.

5. Die Methode gemäß einem der Ansprüche 1 bis 4, worin die Dicke der Graphen - Schicht (B) weniger als 100 nm beträgt.

6. Die Methode gemäß einem der Ansprüche 1 bis 5, worin die Dicke der Hülle (C) 1 -500 nm beträgt.

7. Die Methode gemäß einem der Ansprüche 1 bis 6, worin das Material des besagten magnetischen Kerns (A) ausgewählt ist aus der Gruppe umfassend Eisen, Kobalt, Nickel, Gadolinium, Samarium und Kombinationen davon in jeglicher Oxidationsstufe.

8. Die Methode gemäss einem der Ansprüche 1 bis 7, worin die Graphen - Schicht (B) im wesentlichen besteht aus, oder besteht aus, Kohlenstoff der sp2 - hybridisiert ist.

9. Die Methode gemäss einem der Ansprüche 1 bis 8, worin das Material der besagten Hülle (C) ausgewählt ist aus der Gruppe umfassend
- Silicatglas - Zusammensetzungen, oder
- reines oder im wesentlichen reines Silica, oder
- dotiertes Silica enthaltend weniger als 50 Gew-% Dosierungsmittel ausgewählt aus der Gruppe umfassend Bor, Kalzium, Natrium, Eisen, Kobalt, Kalium, Chlor, Fluor, Karbonat, Phosphat

10. Die Methode gemäss einem der Ansprüche 1 bis 9, worin Hülle (C) teilweise oder vollständig von einer funktionalen Lage (D) bedeckt ist,
besagte funktionale Lage (D) kovalent oder durch intermolekulate Bindungen an Hülle (C) gebunden ist , und
besagte funktionale Lage (D) aus kleinen Molekülen mit einer oder mehreren funktionellen Gruppen besteht, bevorzugt worin besagtes kleins Molekül ausgewählt is aud der Gruppe der Silane mit einem molekularen Gewicht unter 520 g/mol.

11. Die Methode gemäss einem der Ansprüche 1 bis 10, worin zumindest 50% des anfänglichen materialspezifischen magnetischen Momentes bei 2 Tesla erhalten bleiben nach Behandlung mit 1 N HCl bei Raumtemperatur für 24 Stunden.

12. Eine Methode zur Herstellung eines Komposites, worin besagtes Komposit ein polymeres Material (E) enthält und Partikel erhalten gemäß einem der Ansprüche 1 - 11, und
besagte Partikel auf der Oberfläche des besagten Polymers lokalisiert sind, und
besagte Methode den Schritt der Beschichtung des besagten Polymers mit besagten Nanopartikeln umfasst.

13. Eine Methode zur Herstellung eines Komposites, worin besagtes Komposit ein polymeres Material (E) enthält und Partikel erhalten gemäß einem der Ansprüche 1 - 11, und
besagte Partikel im inneren des besagten Polymers verteilt sind, und
besagte Methode den Schritt der Kombination eines Pre-Polymers mit besagten Nanopartikeln umfasst und der Mixtur ermöglicht wird einen Blend zu bilden.

## Revendications

1. Un procédé pour la fabrication des particules,
lesdites particules ayant un diamètre compris entre 10 et 2000 nm, et
lesdites particules consistant d'une enveloppe et d'un ou des plusieurs noyaux magnétiques, ledit noyau magnétique consistant d'un matériau ferromagnétique, ferrimagnétique ou superparamagnétique (A) revêtu avec une ou plusieurs couches de graphène (B) et ladite enveloppe (C) consistant d'une composition de verre à base d'oxydes, et
ledit procédé comprenant les étapes
a) de prévoir des particules avec un noyau magnétique (A) et revêtues avec une couche de graphène (B),
b) d'activer lesdites particules b1) par une modification chimique, b2) par revêtement avec des polymères ou b3) par une oxydation de la surface du carbone,
c) de revêtir les particules activées avec une composition de verre à base d'oxydes,
d) optionnellement en outre de fonctionnaliser les particules obtenues avec des petites molécules.

2. Le procédé selon la revendication 1, pendant l'étape b)
- une telle modification chimique étant atteinte en introduisant des groupes fonctionnelles par chimie à la base de diazonium, ou
- un tel revêtement étant atteint avec des polymères sélectionnés du groupe de polyéthylènimines, ou
- une telle oxydation étant atteinte par température et/ou des acides forts.

3. Le procédé selon la revendication 1 ou 2, lesdites particules étant des nanoparticules primaires ou des nanoparticules secondaires.

4. Le procédé selon l'une quelconque des revendications 1 à 3, la largeur dudit noyau magnétique (A) étant comprise entre 10 et 1000 nm.

5. Le procédé selon l'une quelconque des revendications 1 à 4, l'épaisseur de ladite couche de graphène (B) étant inférieure à 100 nm.

6. Le procédé selon l'une quelconque des revendications 1 à 5, l'épaisseur de ladite enveloppe (C) étant comprise entre 1 et 500 nm.

7. Le procédé selon l'une quelconque des revendications 1 à 6, le matériau dudit noyau magnétique (A) étant sélectionné du groupe consistant de fer, cobalt, nickel, gadolinium, samarium et leurs combinaisons dans quelconque état d'oxydation.

8. Le procédé selon l'une quelconque des revendications 1 à 7, la couche de graphène (B) consistant essentiellement de carbone hybridé sp2.

9. Le procédé selon l'une quelconque des revendications 1 à 8, le matériau de ladite enveloppe (C) étant sélectionné du groupe consistant de
- silicate
- compositions de verre ou
- silice pure ou essentiellement pure ; ou
- silice dopé contenant moins de 50% par poids de dopants sélectionnés du groupe consistant de bore, calcium, sodium, fer, cobalt, potassium, chlore, fluor, carbonate, phosphate.

10. Le procédé selon l'une quelconque des revendications 1 à 9, l'enveloppe (C) étant partiellement ou entièrement couverte par une couche fonctionnelle (D), ladite couche fonctionnelle (D) étant liée par covalence ou par des liaisons intermoléculaires avec l'enveloppe (C) et ladite couche fonctionnelle (D) consistant des petites molécules avec un ou plusieurs groupes fonctionnelles, lesdites petites molécules étant préférablement sélectionnées du groupe consistant de silanes ayant un poids moléculaire inférieur à 520 g/mol.

11. Le procédé selon l'une quelconque des revendications 1 à 10, au moins 50% du moment magnétique initial du matériau à 2 teslas étant maintenu après le traitement de 1N HCl à température ambiante pendant 24 heures.

12. Un procédé pour la fabrication d'un composite, ledit composite contenant un matériau de polymère (E) et des particules obtenues selon l'une quelconque des revendications 1 à 11, et
lesdites particules étant situées à la surface dudit polymère (E), et
ledit procédé comprenant l'étape de revêtir ledit polymère avec lesdites particules.

13. Un procédé pour la fabrication d'un composite, ledit composite contenant un matériau de polymère (E), et des particules obtenues selon l'une quelconque des revendications 1 à 11, et
lesdites particules étant distribuées dans ledit polymère (E), et
ledit procédé comprenant l'étape de combiner un pré-polymère avec lesdites particules et de permettre la mixture afin de former une mélange.
